# EUROPEAN PATENT APPLICATION

(11) **EP 0 582 750 A1**
(43) Date of publication of application: **16.02.1994**
(21) Application number: 92202460.9
(22) Date of filing: 11.08.1992
(51) Int. Cl.: G03C 1/795, G03C 1/95, B32B 27/36, B41M 5/00

(54) **Photographic material with opaque polyester film support**

(71) Applicant: AGFA-GEVAERT naamloze vennootschap, B-2640 Mortsel (BE)
(72) Inventor: Stevens, Marc, B 2640 Mortsel (BE); Plassers, Patrick, B 2640 Mortsel (BE); Van Coppenolle, Gery, B 2640 Mortsel (BE)

(57) **Abstract**

An image-forming material comprising a support carrying an image-forming coating, the support being in the form of a layer of voided polyester film comprising particles of polyolefin dispersed throughout a biaxially orientated heat set polyester film layer and which has a layer of non-polyolefin voided polyester applied to a surface of the voided polyester layer. The image-forming layer is applied to the layer of non-polyolefin voided polyester which includes 5-25% by weight of white pigment (titanium dioxide) and has a thickness of between 1-50 microns.

## Description

This invention relates to an image-forming material made from opaque voided polyester films and in particular to such films which may be used as paper substitutes in the photographic art.

United States Patent 4187113 describes the manufacture of a voided polyester film of the type comprising a polyester base containing between 3-27 % of polypropylene dispersed therein, which is biaxially orientated during processing to produce an opaque film having a light transmission of not in excess of 20 %.

Voided polyester films of the above type are strongly hydrophobic and will not form a strong bond with a hydrophilic photosensitive layer of the type used in the manufacture of photographic papers. It is known to treat the surface of a hydrophobic support with a primer coat by a process known as subbing in which a coating of at least one intermediate layer is put down on the support for anchoring the hydrophilic photosensitive layer(s) thereto.

Voided polyester films of the above type are not considered to be sufficiently opaque for photographic print material or for use as dye receptor element in thermal dye transfer processes, which require an opacity greater than 96%. Further the penetration of light into the opaque voided layer may cause light scatter which gives rise to dot gain and a diffused picture, and the paper substitutes may have a poor crease resistance.

The present invention provides an image forming material which overcomes the above problems.

Accordingly there is provided an image forming material comprising a support carrying an image-forming coating, the support being in the form of a layer of voided polyester film comprising particles of polyolefin dispersed throughout a biaxially orientated heat set polyester film layer and which has a layer of polyester which is not voided by polyolefin (herein after referred to as non-polyolefin voided polyester) applied to a surface of the voided polyester layer, characterised in that the image-forming layer is applied at the side of the layer of non-polyolefin voided polyester and that the non-polyolefin voided polyester layer includes 5-25 % by weight of white pigment and has a thickness of between 1-50 microns, preferably between 5 and 20 microns.

With such a material it is possible to have an opacity of at least 96 %.

By image-forming coating is meant a layer wherein an image is formed directly from a photosensitive composition e.g. a silver halide emulsion layer or indirectly through transfer from a donor element or layer e.g. as in the well known silver complex diffusion transfer process, in dye-diffusion transfer processes and in thermal dye transfer processes.

Preferably the other surface of the voided polyester film is coated by a second layer of non-polyolefin voided polyester film.

Preferably, the non-polyolefin voided film is a non-voided polyester film and preferably, the first layer of pigmented non-voided polyester film may contain between 5-25% by weight of titanium dioxide and the second layer of non-voided polyester film may contain silicon dioxide to give a writing surface.

Whilst in the preferred embodiment, the non-polyolefin voided polyester film is coextruded with the voided polyester film, pre-manufactured voided film and non-voided film could be assembled together between hot rollers before, after or between the biaxial stretching operations.

The polyester film is preferably made from a polyester which is the polycondensation product of terephthalic acid and ethylene glycol to produce a linear polymer containing between 70-140 repeating units. The film may be formed from other linear polyesters which are produced by condensing one or more dicarboxylmic acids or a lower alkyl diester thereof, e.g., isophthalic, sulpho isophthalic, phthalic, orthophthalic, 2,5-, 2,6-, or 2,7-naphthalene dicarboxylic acid, succinic acid, sebacic acid, adipic acid, azelaic acid, bibenzoic acid, hexahydroterephthalic acid, or bis-p-carboxy phenoxy ethane, with one or more glycol, e.g. ethylene glycol, 1.3-propanediol, 1-4 butanediol, neopentyl glycol and 1,4-cyclohexane dimethanol. Mixtures of acids could be condensed with one or more glycols. The film can also be made of a blend of two or more polyester compositions.

The condensation product can be mixed with the polyolefin by several routes :
a) the granulated polyester is dry blended with powdered or granulated polyolefin, and the mixed blend fed into the extruder, or
b) the melt of the condensation product is fed into a melt extruder and the polyolefin is separately melted in an extruder and the polyolefin melt is then fed into the melt extruder to mix with the polyester melt. This route offers best results for uniform distribution of the polyolefin in the polyester.

The polyolefin may be a homopolymer or a copolymer of ethylene (high or low density) or of propylene. A mixture of homopolymers and copolymers may also be used. Preferably a homopolymer of propylene is used; an amount of 3-30 % by weight of total blend is mixed into the polyester, and more preferably about 10-20 % by weight of polypropylene. Amounts of polyolefin above 30 % lead to easy film rupture during production, and below 3 % there is little or no opacifying effect.

The polyolefin and polyester are mixed in the high-shear extruder at about the melting point of the polyester and since the polyolefin and polyester are incompatable the polyolefin exists as discrete globules within the polyester continuous phase. The film opacity is produced when the film is stretched causing voids around the globules at the polyolefin/polyester interface. The polyolefin, preferably polypropylene, globules should be small to provide opacity and crease resistance and should generally have an average diameter in the range of between 5-10 microns.

Simultaneously a second extruder melts the non-polyolefin containing, pigmented polyester and a third extruder melts the non polyolefin polyester.

The mixed polyester/polyolefin melt and the non-polyolefin containing, pigmented polyester (second extruder) or the mixed polyester/polyolefin melt and the non-polyolefin containing, pigmented polyester melt (second extruder) and the non-polyolefin polyester melt (third extruder) are coextruded through a feedblock and a one-slit die or through a multilayer die into a multilayer film (both sides pigmented layers or one side pigmented layer and the other side non pigmented layer or both sides non pigmented layers. After the die the multilayer film is rapidly quenching upon a casting drum as quickly as possible to produce a film in an amorphous state.

The non-polyolefin voided pigmented layer will contain between 5-25% by weight of pigment. In a preferred embodiment of the invention, the polyester/polyolefin film layer would have a polyester layer coextruded on each side thereof forming a sandwich construction having a voided polyester core with a non-voided pigmented layer on the upper side of the voided layer adjacent the image-forming coating, and a second non-voided polyester layer pigmented or not on the underside of the voided layer. The two outer layers may also contain auxiliary additives, e.g. optical brightening agents, antistatic agents, blue dyes increasing the white appearance, etc. The pigment(s) and additives are preferably incorporated into the non-voided polyester by mixing with the granulated or powdered polyester and then melted. Separate melts may be formed of the polyester with the pigment on the one hand and of the polyester with the additives on the other hand which melts are run simultaneously in the melt-extruder.

In another embodiment, at least one outer layer could be voided by barium sulphate.

The two outer polyester layers may be, but not necessarily, formed from the same polyester as the base material of the core layer. The non-polyolefin voided polyester may be more amorphous than the polyester of the core layer to improve the crease resistance. The outer layers may have the same or different compositions.

The combined film layers are then biaxially oriented by stretching in one direction and then in a second direction. The extruded combined film layers will have a thickness of approximately 500 to 2000 µm and are first stretched longitudinally in the direction of extrusion by setting the surface speed V2 of the rotating rollers relative to the linear extrusion speed V1 so that the stretch ratio is V2/V1. The longitudinal stretching ratio should be sufficient to create voids. Stretching is preferably done at a temperature above but close to the glass transition temperature of the polyester in order to improve opacity. The preferred stretch ratio is about between 3 and 4.

The longitudinal stretching operations known in the art to produce biaxially oriented polyester film may be used. For instance, the combined film layers are passed between a pair of infra red heaters which heats the layers to a temperature above the glass transition temperature of the polyester (about 80 degrees C for polyethylene terephthalate) in the region where the stretching occurs.

By longitudinal stretching voids are produced at the polyester/polyolefin interface in the polyester/polyolefin layer extending longitudinally from each polyolefin globule.

Before or after longitudinal stretching a first subbing layer, called a primer layer, may be applied to the non-voided polyester layer by a coating means such as an air knife coating system. The first subbing layer is for example formed from a chloride containing copolymer such as vinylidene chloride copolymer in latex form having some hydrophilic functionality through the presence of a copolymerized unsaturated carboxylic acid which is applied as an aqueous dispersion. Also, polyester/polybutadiene copolymers as disclosed in European Patent application No. 922005939 may be used.

The combined layers with the primer layer(s) thereon are then passed through hot air heaters and the film heated above the glass transition temperature for transverse stretching by means of a tenter apparatus. The stretch ratio in the transverse direction is preferably between 3 and 4. The transverse stretching of the film causes the voids to extend transversely of each polyolefin globule.

The biaxially stretched combined film layers are passed through a second set of hot air heaters which blow hot air at a temperature of between 160 and 240 degrees Centrigrade onto the film layers to heat set the film layers. The heat set temperature must be sufficient to obtain crystallization of the polyester but care must be taken not to overheat the layers since the voids can collapse. On the other hand increasing the heat set temperature improves the crease resistance of the film. A compromise of the properties depending upon heat set temperatures must be chosen. The primer layer must be capable of undergoing stretching and heat setting.

The final multilayer support material may have a thickness of about 75-300 microns with the non-polyolefin voided polyester layer having a thickness T2 of between 1 and 50 µm, preferably between 5 and 20 microns and the voided polyester layer having a thickness T1 of between 55-250 microns. If the thickness T2 is below 5 microns the exposed surface of the non-voided layer will have the same surface roughness as the base voided layer, and above a thickness T2 of 20 microns the material becomes heavier and less paperlike. The voided layer is less dense than the non-voided layers and has a specific gravity of between 0.5-0.95 gm/cm³.

After heat setting a second subbing layer usually containing gelatin in admixture with a hydrophobic latex-copolymer e.g. a butadiene/acrylonitrile copolymer and preferably also colloidal silica, may be applied to the primer layer by for instance a cascade coating apparatus. The subbing layer promotes the adhesion of photographic gelatin layers to the support. The coated film layers may then be cut-to-width and are coated either before or after cutting with a light-sensitive gelatin silver halide emulsion layer or other image-forming layer and other auxiliary layers.

A non-polyolefin voided layer can be placed on either side of a voided core layer. At least the non-polyolefin voided polyester layer which is coated by the image forming layer contains additives. Most specifically additives which are only or most functional at the surface of the film support may be added to the outer layers. This procedure allows for a reduction in the total addition of additive with the same or better functional result than adding the additive to the core layer. Pigmenting of the core layer is preferably not applied as this impairs the stretching operations.

White pigments such as TiO₂ are added to increase the opacity of the material and improve the surface reflectivity and image sharpness by reducing light scatter deeper in the film support. SiO₂ can be added to give the material a good writing surface. Anti-static agents can be added in the outer layers to improve the electrical properties. The appearance and brightness can be improved by adding fluorescent brighteners and/or coloured compounds in the outer layer.

The non-polyolefin voided layer adjacent the image-forming coating may be pigmented by titanium dioxide or barium sulphate, preferably 10-20 % by weight of titanium dioxide, and typically in the order of 15 %. A material of voided polyester film containing 15 % polypropylene and having a pigmented layer of non-voided polyester thereon will have an opacity of greater than 96% when measured by opacity test T425m-60 as published by TAPPI, 360 Lexington Ave, New York, USA.

The very thin pigmented layer of non-voided polyester reduces any light penetration therein to a minimum and is essentially surface reflecting, reducing light scattering to a minimum and thereby provides a print material giving excellent image sharpness.

For the sandwich structure having on either side a non-voided polyester layer, silicon dioxide can be added to the bottom layer to give the material a good writing surface.

The following table shows for a number of examples opacity, picture sharpness, and crease resistance properties for various sandwich contructions comprising a core layer of 85% by wgt polyethylene terephthalate voided by 15% by wgt polypropylene having a melt flow index of 3 (ASTM D1238), with outer layers of polyethylene terephthalate having TiO₂ (anatase form) filler of various concentrations as shown. The TiO₂ has a particle size of 0.2-0.3 µm. The layers were extruded at 270-280 degrees centigrade at differing melt flows depending upon the thicknesses of the final layers and with an initial total extrudate thickness of 1100 µm. The extrudate was drawn down with longitudinal stretching ratio of 3.3 and longitudinal stresses as shown in the table and transverse stretching ratio of 3.0 at a temperature of 100 degrees centigrade and at stretching speed of 1000% per minute to give final total film thicknesses as shown. Examples 9-11 were heat set. Table 1 gives the processing data and table 2 gives test data for the film supports described herein coated with photosensitive and auxiliary layers as used for photographic print paper.

**Table 1**

| Variable processing data | | | | |
|---|---|---|---|---|
| Number example | Melt flow core layer (kg/hour) | Melt flow outer layers (kg/hour) | Longitudinal stretch stress (N/mm²) | Heat-set T (°C) |
| 1 | 115 | 29 | 2.6 | - |
| 2 | 115 | 31 | 3.8 | - |
| 3 | 124 | 31 | 3.6 | - |
| 4 | 124 | 32 | 4.0 | - |
| 5 | 208 | 25 | 3.8 | - |
| 6 | 124 | 31 | 3.9 | - |
| 7 | 36 | 28 | 3.8 | - |
| 8 | 90 | 31 | 3.2 | - |
| 9 | 90 | 31 | 3.2 | 160 |
| 10 | 90 | 31 | 3.2 | 180 |
| 11 | 90 | 31 | 3.2 | 200 |

composition and thickness of the biaxially stretched films : see table 2.

**Table 2**

| Properties | | | | | | |
|---|---|---|---|---|---|---|
| Number example | Outer layer thickness (µm) | TiO₂ (%) | Total thickness (µm) | Opacity (1) (%) | Picture sharpness (2) | Creasing resistance (3) |
| 1 | 10 | 5 | 273 | 97.5 | K0 | 20 |
| 2 | 10 | 10 | 263 | 98.0 | K2 | 20 |
| 3 | 10 | 15 | 253 | 98.5 | K4 | 20 |
| 4 | 10 | 20 | 231 | 98.0 | K4 | 8 |
| 5 | 5 | 10 | 200 | 97.0 | K2 | 10 |
| 6 | 10 | 10 | 201 | 97.0 | K2 | 8 |
| 7 | 30 | 15 | 254 | 96.5 | K4 | 16 |
| 8 | 13 | 10 | 178 | 95.0 | K1 | 8 |
| 9 | 13 | 10 | 141 | 92.0 | K1 | 6 |
| 10 | 13 | 10 | 151 | 93.5 | K1 | <6 |
| 11 | 13 | 10 | 148 | 92.0 | K1 | <6 |
| (1) The opacity is measured as described by test T425m-60 published by TAPPI, 360 Lexington Ave, New York, USA. (2) Exposure through a lattice of 8 lines/mm. Evaluation : K4 = excellent K3 = very good K2 = good K1 = poor K0 = bad. Conventional polyethylene coated paper for photoprints (Agfa CN-310 paper) has an evaluation of K3. (3) Test procedure : bending the film support (without emulsion layers) over rolls of 6-8-10-12-14-16-18 and 20 mm diameter. The smallest roll whereby no creasing is noticed is given. For conventional polyethylene coated paper (Agfa CN-310) =<6. | | | | | | |

An increase of TiO₂-content from 5 to 15 % gives a large improvement of picture sharpness. Heatsetting increased the crease resistance but lowers the opacity.

A further advantage of putting the additives in the non voided polyester layer is that additives in the voided base layer often cause problems due to the effect on the stretch and crystallization properties of the film.

The sandwich structure having on either side a non-voided polyester layer decreased the gloss difference between both surfaces of the combined extrudate film, which is caused by the difference between the surface roughness on the air side and roller side of the extrudate passing over the quenching drum, as compared with an extrudate film of voided polyester only. Further the outer layers help to mask the inherent roughness of the voided layer due to the polyolefin globules to produce a smoother material.

The photographic print material made from the above multilayer film has a similar weight and feel to the traditional paper print material.

The following example illustrates the favourable use of a support as described for forming an image forming element according to thermal dye transfer.

### Example 12

A polyethylene coated paper and a film support according to the present invention having the structure given below, were coated with a composition in methylethylketone for forming a receiving layer comprising 5 g/m² of poly(vinylchloride-co-vinylacetate-co-vinylalcohol) (90/4/6 wt>%) (sold under the tradename VINYLITE VAGD by Union Carbide), 0.5 g/m² diisocyanate (DESMODUR VL supplied by Bayer AG), and 0.2 g/m² hydroxy modified polydimethylsiloxane (TEGOMER H SI 2111 supplied by Goldschmidt). After coating the layer was dried at 120°C during 15 minutes. In this way two dye-receiving elements were obtained.

The film support according to the present invention consisted of a core-layer of 85 % by wgt polyethylene terephthalate voided by 15 % by wgt of polypropylene having a flow index of 3 (ASTM D1238) with outer layers of polyethylene terephthalate containing 10 % by wgt of barium sulphate. The core layer had a thickness of 188 µm whereas both other layers had a layer thickness of 16 µm. The opacity was 92 %.

A dye donor element was prepared as follows :
A solution comprising 10 wt% of dye A and 10 wt% of poly(styrene-co-acrylonitrile) as binder in methylethylketone as solvent was prepared. From this solution a layer having a wet thickness of 10 µm was coated on 6 µm thick polyethylene terephthalate film. The resulting layer was dried by evaporation of the solvent.

### dye A

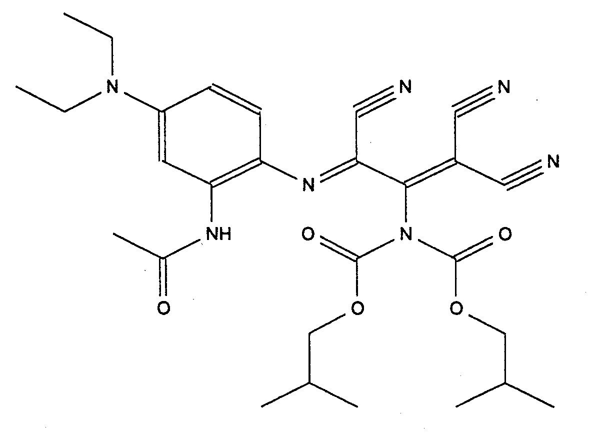

The back side of the polyethylene terephthalate film was provided with a slipping layer coated from a solution containing 13 wt% poly(styrene-co-acrylonitrile) binder and 1 wt% polysiloxane-polyether copolymer as lubricant. A cyan dye donor element was obtained.

A magenta and yellow dye donor element were prepared in a silimar way, except that for the magenta dye donor, 5 wt% of dye B and for the yellow dye donor element 10 wt% of dye C.

### dye B

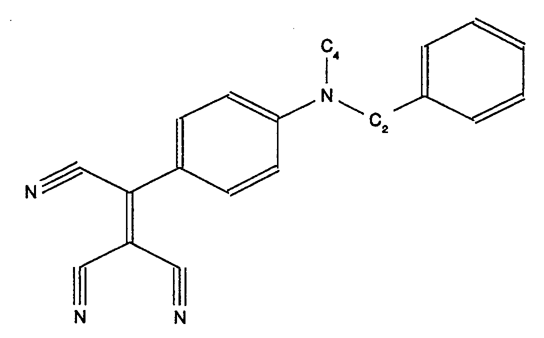

### dye C

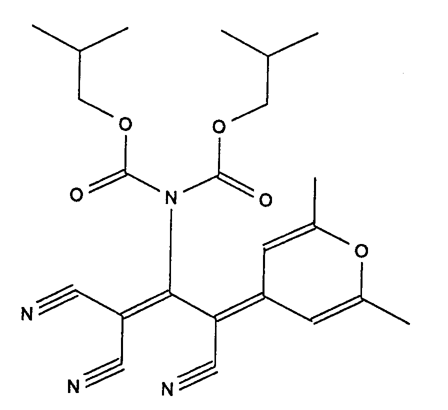

The above mentioned dye donor elements (cyan, magent and yellow) were assembled in a 3-color dye donor element.

The obtained dye donor element was printed on both dye receiving elements in a Mutsibishi video printer type CP 100. The receiver sheet was separated from the dye-donor element and the dye density of the transferred image in reflection was measured in the red, green and blue region by means of a Macbeth TD102 densitometer.

The sharpness of the obtained dye image stored for 28 days at 60°C and 90% relative humidity was visually evaluated.

The results are indicated in table 3 below.

**Table 3**

| Support | Blue | Green | Red | Sharpness |
|---|---|---|---|---|
| Polyethylene coated paper (reference) | 1.08 | 1.50 | 1.06 | bad |
| Support of the present invention | 1.46 | 1.88 | 1.17 | very good |

As can be seen from table 3, a dye receiving element comprising the support of the present invention has higher reflection densities and an excellent storage stability.

## Claims

1. An image forming material comprising a support carrying an image-forming coating, the support being in the form of a layer of voided polyester film comprising particles of polyolefin dispersed throughout a biaxially orientated heat set polyester film layer and which has a layer of polyester which is not voided by polyolefin (hereinafter referred to as non-polyolefin voided polyester) applied to a surface of the voided polyester layer, characterised in that the image-forming layer is applied at the side of the layer of non-polyolefin voided polyester and that the non-polyolefin voided polyester layer includes 5-25% by weight of white pigment and has a thickness of between 1-50 microns.

2. A material according to claim 1, wherein the image-forming layer is a silver halide emulsion layer.

3. A material according to claim 1, wherein the image forming layer is a thermal dye transfer receptor layer.

4. A material as claimed in any of claims 1 to 3, characterised in that the other surface of the voided polyester film is coated with a second layer of non-polyolefin voided polyester film.

5. A material as claimed in claim 4, characterised in that the second non-polyolefin voided layer contains different additives as the pigmented first non-polyolefin voided layer to which the photosensitive coating is applied.

6. A material as claimed in any of one of claims 1 to 5, wherein the pigmented first non-polyolefin voided layer contains between 5-25% by weight of titanium dioxide.

7. A material as claimed in claim 4 or 5, characterized in that the second layer of non-polyolefin voided polyester film contains silicon dioxide as an additive.

8. A material as claimed in any one of the claims 1 to 7, characterised in that the voided polyester layer has a thickness of between 55-250 microns.

9. A material as claimed in any of claims 1 to 8, characterised in that the total thickness of the support is 75-300 microns.

10. A material as claimed in any one of claims 1 to 9, characterised in that the support has an opacity of not less than 96%.

11. A material as claimed in any one of claims 1 to 10, characterised in that the voided layer contains about 15% by weight of polypropylene homopolymer therein distributed through the polyester phase as globules having a diameter of between 5-10 microns.

12. A material as claimed in any one of claims 1 to 11, characterised in that the image-forming coating is applied to the support through an intermediate subbing layer which is thermofixed to the first non-voided pigmented polyester layer.
